# EUROPEAN PATENT SPECIFICATION

(11) **EP 0 507 810 B1**
(45) Date of publication and mention of the grant of the patent: **23.08.1995**
(21) Application number: 91901414.2
(22) Date of filing: 22.11.1990
(51) Int. Cl.: G02B 6/24

(54) **A FIBREOPTIC SWITCH**
FASEROPTISCHER SCHALTER
COMMUTATEUR POUR FIBRES OPTIQUES

(30) Priority: 21.12.1989 SE 8904324
(43) Date of publication of application: 14.10.1992
(73) Proprietor: TELEFONAKTIEBOLAGET L M ERICSSON, 126 25 Stockholm (SE)
(72) Inventor: SJÖLINDER, Sven, Rickhard, S-126 54 Stockholm (SE)
(74) Representative: Lövgren, Tage
(86) International application number: PCT/SE90/00763
(87) International publication number: WO 91/10150

(56) References cited:
- EP-A- 0 096 608
- US-A- 4 193 662

## Description

### TECHNICAL FIELD

The present invention relates to a switch for enabling selective optical connection of at least one of a number n of incoming optical fibres with a respective one of a number m of outgoing fibres.

### PRIOR ART

A switch affords a possibility of disposing connections in an ordered array. In the case of opto techniques, the connections consist of optical fibres. Manual installation of these fibres in the absence of any ordered lay-out will ultimately result in an unbelievable bundle of tangled fibres which is almost impossible to unravel or which requires expensive de-installation. Attempts have been made to provide mechanical solutions which will overcome these problems. One solution, see e.g. EP-A-0 096 608, has been to arrange incoming and outgoing optical fibres perpendicularly to one another in one plane, and to mount raisable and lowerable mirrors or like light deflecting devices at the points at which the fibre axes intersect one another. The drawback with this solution is that it requires the provision of many optical components of high precision. Attenuation in signal transmission is also high.

Other solutions attempted with switches of this kind, see e.g. EP-A-0 161 683, have included arranging the incoming and outgoing optical fibres in a matrix system. The switch includes a plurality of optical dividers each connected to a respective incoming optical fibre, a plurality of optical switches disposed at the matrix intersection points, and a plurality of optical combiners each connected to a respective outgoing optical fibre. Each switch includes an optoelectric element, an amplifier and an electrooptic element. Because of the large number of structural com-ponents involved, a switch of this kind is expensive and complicated, particularly in the case of large switchs affording many coupling possibilities. The switch also requires a continuous supply of current.

### DISCLOSURE OF THE INVENTION

The object of the present invention is to avoid the drawbacks of known switchs by providing an optical switch which is inexpensive and reliable and to which current need only be supplied when a change-over is made, and which is of simple construction. This object is achieved with a switch which includes a matrix system having n*m light transmission components arranged in a matrix of n rows and m columns, n separate means for receiving each a free end of a respective one of the n incoming optical fibres, each of said n means being associated with a respective row of said matrix system on the input side thereof, and m separate means for receiving each a free end of a respective one of the m outgoing optical fibres, each of said m means being associated with a respective column of said matrix system on the output side thereof, said matrix system consisting of a matrix block in which said n*m light transmission components are constituted by n*m elongate light conducting elements each extending from an input face to an output face of said block, with the input ends and the output ends of said light conducting elements being arranged in a matrix of n rows and m columns on said input and output faces, respectively, each of said n means for receiving the free end of a corresponding incoming fibre being associated with a respective row of said input ends of said light conducting elements, each of said n receiving means further comprising means for linearly displacing said free end of said corresponding incoming optical fibre, independently of the other ones, along its corresponding row of input ends of light conducting elements, so as to enable the optical connection of said free end with any one of said element input ends arranged on said row, and each of said m means for receiving the free end of a corresponding outgoing fibre being associated with a respective column of said output ends of said light conducting elements, each of said m receiving means further comprising means for linearly displacing said free end of said corresponding outgoing optical fibre, independently of the other ones, along its corresponding column of output ends of light conducting elements, so as to enable the optical connection of said free end with any one of said element output ends arranged on said column, whereby said desired optical connection of said selected one of said n incoming fibres with said selected one of said m outgoing fibres can be performed by displacing, on the one hand, said selected incoming fibre along its corresponding row to that column with which said selected outgoing fibre is associated, and on the other hand, said selected outgoing fibre along its corresponding column to that row with which said selected incoming fibre is associated.

The light conducting elements are preferably waveguides, optical fibres or the like. The means for receiving and linearly displacing the free end of each of said incoming and outgoing optical fibres are advantageously constituted by slides or corresponding devices which can be displaced in corresponding guide grooves in both said input and output faces of the matrix block, the light transmitting elements terminating in the bottom of the guide grooves on both said input and output faces.

Each slide will preferably include a spring-biased ball capable of engaging a recess provided in each guide groove and corresponding to each row and column of light conducting elements respectively, so as to enable respective incoming or outgoing optical fibres to be set to their correct positions.

An advantage is afforded when the slides can be displaced in the guide grooves with the aid of stepping motors or the like, and, when seen in cross section, the slides will preferably have a trapezoidal configuration with the base facing towards the matrix block. The guide grooves are correspondingly configured and the optical fibres terminate in the base of the trapezoidal slides.

An optical switch constructed in accordance with the invention provides several advantages. One advantage is that there is no need to directly remount the connections, i.e. the optical fibres, thereby avoiding tangles. The particular arrangement of a matrix enables the maximum number of coupling possibilities to be obtained, i.e. the maximum possible number of combinations between inputs and outputs.

The use of a wave conductor, optical fibre or the like as the light transmission components affords the advantage that low attenuation can be achieved in all set-ups.

Because the optical fibres are received in means disposed on slides or the like capable of being displaced in corresponding guide grooves in the matrix blocks, there is obtained a very simple mechanical construction. The provision on each slide of a spring-biased ball, which can engage in a recess formed in each guide groove and corresponding to each row and column of light transmitting devices respectively, affords the advantage of enabling respective optical fibres to be positioned very accurately.

Because the slides can be displaced in the guide grooves with the aid of stepping motors or the like, and because the slides have a trapezoidal cross-section with the base facing towards the matrix block and because the guide grooves have a corresponding configuration, the optical fibres can be accurately positioned with the aid of simple means and the mechanical construction is reliable. No separate means are required to hold the slides in position on the matrix block.

The invention will now be described in more detail with reference to an exemplifying embodiment thereof and with reference to the accompanying drawings.

### BRIEF DESCRIPTION OF THE DRAWINGS

Figure 1 is a perspective view of a preferred embodiment of an inventive optical switch,
Figure 2 is a sectional view of one part of the switch illustrated in Figure 1.

### BEST MODE FOR CARRYING OUT THE INVENTION

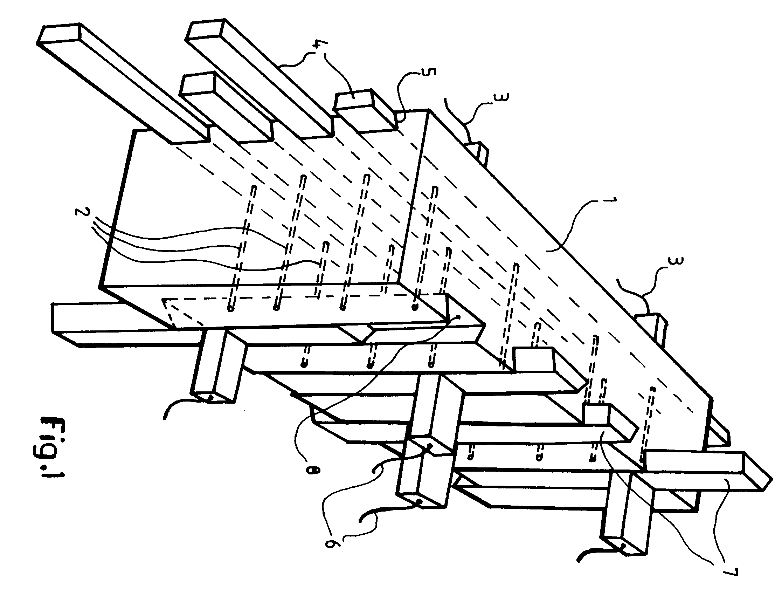

Figure 1 illustrates in perspective a preferred embodiment of an inventive optical switch. The switch includes a matrix block 1 having a plurality of light transmission components 2 which are arranged in n number of rows and m number of columns. For the sake of illustration, only four rows and four columns have been shown on the drawing, although it will be understood that any number of rows and columns may be provided and that the number of rows and columns is only restricted by the size of the switch and by what can be considered reasonable from the aspect of construction. Neither need the rows and columns be of mutually equal numbers, as in the case of the illustrated embodiment, but can be varied independently of one another. The light transmission components 2 extend through the matrix block 1 from an input face to an output face and consist of waveguides, optical fibres or simply of a hole which extends through the matrix block, provided that the block is narrow.

The incoming optical fibres 3 on the input side are arranged on slides 4 which are inserted in guide grooves 5 in the matrix block 1 and which can be displaced therealong. The guide grooves 5 are disposed so that each of said grooves will extend along a respective row of the n number of rows of light transmitting components 2, with the light transmitting components terminating in the bottom of respective grooves 5. Similarly, the outgoing optical fibres 6 on the output side are disposed on slides 7, which are inserted in guide grooves 8 in the matrix block 1 and can be displaced therealong. The grooves 8 are disposed perpendicularly to the grooves 5 and each of the grooves 8 extends along a respective column of the m number of columns of light transmitting components 2, and the light transmitting components terminate in the bottom of respective grooves 8. When seen in cross-section, the slides 4 and 7 have a trapezoidal configuration, with the base of the trapezium facing towards the matrix block 1. The guide grooves 5 and 8 have a corresponding configuration, so as to guide and hold the slides positively in the matrix block. Both the incoming and outgoing optical fibres 3 and 6 are therewith terminated in the base of the trapezoidal slides.

The aforedescribed arrangement enables connections to be made selectively between the incoming and outgoing optical fibres. For instance, the incoming optical fibre in row 1 can be moved to the third column and the outgoing optical fibre in column 3 can be moved to row 1, so as to connect these two optical fibres together. Similarly, remaining optical fibres can be moved selectively to desired rows and columns respectively, so as to establish the desired connections.

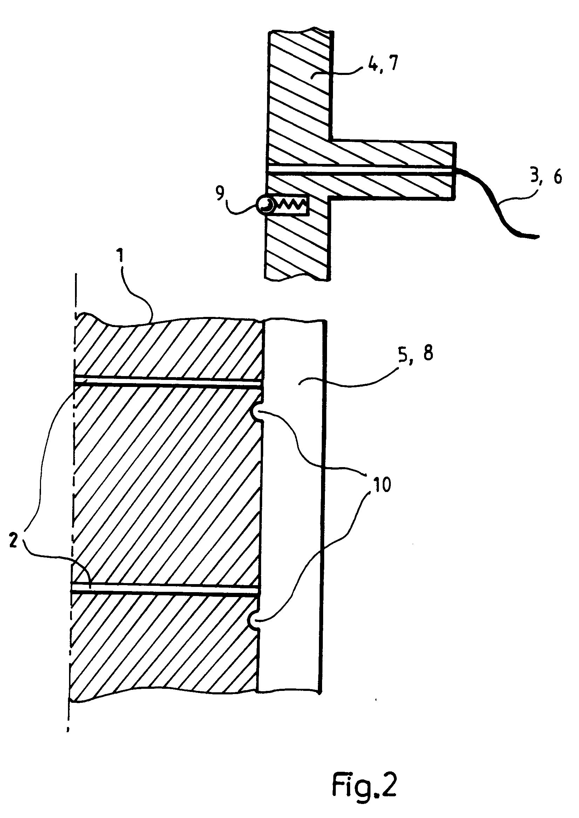

Movement of the slides, and therewith of the optical fibres, to the desired rows and columns can be effected with the aid of stepping motors or the like (not shown) which drive the slides. In order to ensure that the correct setting is obtained, each slide 4 or 7 is provided with a spring-biased ball 9 in the base of the slide, immediately adjacent the optical fibre, as illustrated in Figure 2, which is a sectional view of part of a guide groove 5 or 8 in the matrix block and a part of a corresponding slide 4 or 7. Each guide groove 5 or 8 is provided with corresponding recesses 10 in which the spring-biased ball 9 can engage and which are located immediately adjacent the mouths of the light transmission components 2. This arrangement enables movement of respective slides to be accurately controlled, so that the optical fibre and the light transmitting component will be in alignment with one another, therewith to achieve the best possible light transmission and the smallest possible attenuation.

It will be understood that the aforesaid optical fibres, both the incoming and the outgoing fibres, may also include groups of optical fibres, such as band fibre cable having, for instance, eight fibres, in which case each incoming fibre group can be connected to an outgoing optical fibre group.

## Claims

1. A switch for enabling selective optical connection of at least one of a number n of incoming optical fibres (3) with a respective one of a number m of outgoing fibres (6), said switch including:
- a matrix system (1) having n*m light transmission components arranged in a matrix of n rows and m columns,
- n separate means (4) for receiving each a free end of a respective one of the n incoming optical fibres, each of said n means being associated with a respective row of said matrix system on the input side thereof, and
- m separate means (7) for receiving each a free end of a respective one of the m outgoing optical fibres, each of said m means being associated with a respective column of said matrix system on the output side thereof,
**characterized** in that
said matrix system (1) consists of a matrix block in which said n*m light transmission components are constituted by n*m elongate light conducting elements (2) each extending from an input face to an output face of said block, with the input ends and the output ends of said light conducting elements being arranged in a matrix of n rows and m columns on said input and output faces, respectively,
- each of said n means (4) for receiving the free end of a corresponding incoming fibre (3) is associated with a respective row of said input ends of said light conducting elements, each of said n receiving means (4) further comprising means (4,5) for linearly displacing said free end of said corresponding incoming optical fibre, independently of the other ones, along its corresponding row of input ends of light conducting elements, so as to enable the optical connection of said free end with any one of said element input ends arranged on said row, and
- each of said m means (7) for receiving the free end of a corresponding outgoing fibre (6) is associated with a respective column of said output ends of said light conducting elements, each of said m receiving means (7) further comprising means (7,8) for linearly displacing said free end of said corresponding outgoing optical fibre, independently of the other ones, along its corresponding column of output ends of light conducting elements, so as to enable the optical connection of said free end with any one of said element output ends arranged on said column, whereby said desired optical connection of said selected one of said n incoming fibres with said selected one of said m outgoing fibres can be performed by displacing, on the one hand, said selected incoming fibre along its corresponding row to that column with which said selected outgoing fibre is associated, and on the other hand, said selected outgoing fibre along its corresponding column to that row with which said selected incoming fibre is associated.

2. A switch according to Claim 1, **characterized** in that the light conducting elements (2) are waveguides, optical fibres or the like.

3. A switch according to Claim 2, **characterized** in that said means (4,5;7,8) for receiving and linearly displacing the free end of each of said incoming and outgoing optical fibres (3, 6) are constituted by slides (4, 7) or corresponding devices which can be displaced in corresponding guide grooves (5, 8) in both said input and output faces of the matrix block; and in that the light transmitting elements (2) terminate in the bottom of the guide grooves on both said input and output faces.

4. A switch according to Claim 3, **characterized** in that each slide (4, 7) includes a spring-biased ball (9) which can engage in a recess (10) provided in each guide groove (5, 8) and corresponding to each row and column respectively of light conducting elements (2), for placing respective incoming or outgoing optical fibres in their correct positions.

5. A switch according to any one of Claims 3 or 4, **characterized** in that the slides (4, 7) can be displaced in the guide grooves (5, 8) by means of stepping motors or the like.

6. A switch according to any one of Claims 3 to 5, **characterized** in that in cross-section the slides (4, 7) have a trapezoidal configuration with the base facing towards the matrix block (1) and in that the guide grooves (4, 8) have a corresponding configuration.

7. A switch according to Claim 6, **characterized** in that the optical fibres (3, 6) exit in the base of the trapezoidal slides.

## Patentansprüche

1. Schalter zur Herstellung einer selektiven optischen Verbindung von wenigstens einer einer Anzahl n von ankommenden optischen Fasern (3) mit einer jeweiligen einer Anzahl m von abgehenden Fasern (6), wobei der Schalter umfaßt:
- ein Matrixsystem (1) mit n*m Lichtübertragungskomponenten, die in einer Matrix mit n Zeilen und m Spalten angeordnet sind;
- n getrennte Einrichtungen (4) zur Aufnahme jedes freien Endes einer entsprechenden der n ankommenden optischen Fasern, wobei jede der n Einrichtungen einer jeweiligen Zeile des Matrixsystems auf der Eingangsseite davon zugeordnet ist; und
- m getrennte Einrichtungen (7) zur Aufnahme jedes freien Endes einer jeweiligen der m abgehenden optischen Fasern, wobei jede der m Einrichtungen einer jeweiligen Spalte des Matrixsystems auf der Ausgangsseite davon zugeordnet ist;
dadurch **gekennzeichnet**, daß
das Matrixsystem (1) aus einem Matrixblock besteht, in dem die n*m Lichtübertragungskomponenten durch n*m längliche lichtleitenden Elemente (2) gebildet sind, die sich jeweils von einer Eingangsfläche zu einer Ausgangsfläche des Blocks erstrecken, wobei die Eingangsenden und die Ausgangsenden der lichtleitenden Elemente in einer Matrix von n Zeilen und m Spalten auf den Eingangs- bzw. Ausgangsflächen angeordnet sind;
- jede der n Einrichtungen (4) zur Aufnahme des freien Endes einer entsprechenden ankommenden Faser (3) einer entsprechenden Zeile der Eingangsenden der lichtleitenden Elemente zugeordnet ist, wobei jede der n Aufnahmeeinrichtungen (4) ferner umfaßt eine Einrichtung (4, 5) zum linearen Verschieben des freien Endes der entsprechenden ankommenden optischen Faser, unabhängig von den anderen, entlang ihrer entsprechenden Zeile von Eingangsenden von lichtleitenden Elementen, um so die optische Verbindung des freien Endes mit irgendeinem der auf der Zeile angeordneten Elementeneingangsenden zu ermöglichen; und
- jede der m Einrichtungen (7) zur Aufnahme des freien Endes einer entsprechenden abgehenden Faser (6) einer entsprechenden Spalte der Ausgangsenden der lichtleitenden Elemente zugeordnet ist, wobei jede der m Aufnahmeeinrichtungen (7) ferner umfaßt eine Einrichtung (7, 8) zum linearen Verschieben des freien Endes der entsprechenden abgehenden optischen Faser, unabhängig von den anderen, entlang ihrer entsprechenden Spalte von Ausgangsenden von lichtleitenden Elementen, um so die optische Verbindung des freien Endes mit irgendeinem der auf der Spalte angeordneten Elementenausgangsenden zu ermöglichen, wodurch die gewünschte optische Verbindung der gewählten der n ankommenden Fasern mit der gewählten der m abgehenden Fasern durchgeführt werden kann durch Verschieben einerseits der gewählten ankommenden FASer entlang ihrer entsprechenden Zeile an diejenige Spalte, der die gewählte abgehende Faser zugeordnet ist und andererseits der gewählten abgehenden Faser entlang ihrer entsprechenden Spalte an diejenige Zeile, der die gewählte ankommende Faser zugeordnet ist.

2. Schalter nach Anspruch 1,
dadurch **gekennzeichnet**, daß die lichtleitenden Elemente (2) Wellenleiter, optische Fasern oder dergleichen sind.

3. Schalter nach Anspruch 2,
dadurch **gekennzeichnet**, daß
die Einrichtungen (4, 5; 7, 8) zum Aufnehmen und linearen Verschieben des freien Endes von jeder der ankommenden und abgehenden optischen Fasern (3, 6) durch Schiebeelemente (4, 7) oder entsprechende Einrichtungen gebildet sind, die in entsprechenden Führungsnuten (5, 8) in sowohl den Eingangs- als auch Ausgangsflächen des Matrixblocks verschoben werden können; und daß die Lichtübertragungselemente (2) in dem Boden der Führungsnuten auf sowohl den Eingangs- als auch Ausgangsflächen enden.

4. Schalter nach Anspruch 3,
dadurch **gekennzeichnet**, daß
jedes Schiebeelement (4, 7) eine mittels einer Feder vorgespannte Kugel (9) umfaßt, die in eine Ausnehmung (10) einrücken kann, die in jeder Führungsnut (5, 8) vorgesehen ist und jeder Zeile bzw. Spalte von lichtleitenden Elementen (2) entspricht, um jeweilige ankommende oder abgehende optische Fasern in ihre richtigen Positionen zu bringen.

5. Schalter nach irgendeinem der Ansprüche 3 oder 4,
dadurch **gekennzeichnet**, daß die Schiebeelemente (4, 7) in den Führungsnuten (5, 8) mittels Schrittmotoren oder dergleichen verschoben werden können.

6. Schalter nach einem der Ansprüche 3 bis 5,
dadurch **gekennzeichnet**, daß die Schiebeelemente (4, 7) im Querschnitt einer trapezförmige Konfiguration mit der auf den Matrixblock (1) gerichteten Basis aufweisen, und daß die Führungsnuten (4, 8) eine entsprechende Konfiguration aufweisen.

7. Schalter nach Anspruch 6,
dadurch **gekennzeichnet**, daß die optischen Fasern (3, 6) in der Basis der trapezförmigen Schiebeelemente enden.

## Revendications

1. Commutateur destiné à permettre une connexion optique sélective d'au moins une première d'un nombre n de fibres optiques entrantes (3) avec une première, respective, d'un nombre m de fibres sortantes (6), ledit commutateur comprenant :
- un système matriciel (1) ayant n*m compoants de transmission de la lumière agencés en une matrice de n rangées et m colonnes,
- n moyens séparés (4) destinés à recevoir chacun une extrémité libre d'une première, respective, des n fibres optiques entrantes, chacun desdits n moyens étant associé à une rangée respective dudit système matriciel sur son côté d'entrée, et
- m moyens séparés (7) destinés à recevoir chacun une extrémité libre d'une première, respective, des m fibres optiques sortantes, chacun desdits m moyens étant associé à une colonne respective dudit système matriciel sur son côté de sortie,
caractérisé en ce que
ledit système matriciel (1) est constitué d'un bloc de matrice dans lequel lesdits n*m composants de transmission de la lumière sont constitués par n*m éléments allongés (2) de conduction de la lumière s'étendant chacun d'une face d'entrée à une face de sortie dudit bloc, les extrémités d'entrée et les extrémités de sortie desdits éléments de conduction de la lumière étant agencées en une matrice de n rangées et m colonnes sur lesdites faces d'entrée et de sortie, respectivement,
- chacun desdits n moyens (4) destinés à recevoir l'extrémité libre d'une fibre entrante correspondante (3) est associé à une rangée respective desdites extrémités d'entrée desdits éléments de conduction de la lumière, chacun desdits n moyens (4) de réception comportant en outre des moyens (4,5) destinés à déplacer linéairement ladite extrémité libre de ladite fibre optique d'entrée correspondante, indépendamment des autres, le long de sa rangée correspondante d'extrémités d'entrée d'éléments de conduction de la lumière, afin de permettre la connexion optique de ladite extrémité libre avec l'une quelconque desdites extrémités d'entrée des éléments agencées sur ladite rangée, et
- chacun desdits m moyens (7) destinés à recevoir l'extrémité libre d'une fibre sortante correspondante (6) est associé à une colonne respective desdites extrémités de sortie desdits éléments de conduction de la lumière, chacun desdits m moyens (7) de réception comportant en outre des moyens (7, 8) destinés à déplacer linéairement ladite extrémité libre de ladite fibre optique sortante correspondante, indépendamment des autres, le long de sa colonne correspondante d'extrémités de sortie d'éléments de conduction de la lumière, afin de permettre la connexion optique de ladite extrémité libre avec l'une quelconque desdites extrémités de sortie d'éléments agencées sur ladite colonne, grâce à quoi ladite connexion optique souhaitée de ladite première, choisie, desdites n fibres entrantes avec ladite première, choisie desdites m fibres sortantes peut être réalisée en déplaçant, d'une part, ladite fibre entrante choisie le long de sa rangée correspondante vers la colonne à laquelle ladite fibre sortante choisie est associée et, d'autre part, ladite fibre sortante choisie le long de sa colonne correspondante vers la rangée à laquelle ladite fibre entrante choisie est associée.

2. Commutateur selon la revendication 1, caractérisé en ce que les éléments (2) de conduction de la lumière sont des guides d'ondes, des fibres optiques ou analogues.

3. Commutateur selon la revendication 2, caractérisé en ce que lesdits moyens (4,5 ; 7,8) destinés à recevoir et déplacer linéairement l'extrémité libre de chacune desdites fibres optiques entrantes et sortantes (3, 6) sont constitués par des curseurs (4, 7) ou des dispositifs correspondants qui peuvent être déplacés dans des gorges de guidage correspondantes (5, 8) dans lesdites deux faces d'entrée et de sortie du bloc de matrice ; et en ce que les éléments (2) de transmission de la lumière se terminent dans le fond des gorges de guidage sur lesdites deux faces d'entrée et de sortie.

4. Commutateur selon la revendication 3, caractérisé en ce que chaque curseur (4, 7) comprend une bille (9) rappelée par un ressort qui peut s'engager dans un évidement (10) prévu dans chaque gorge de guidage (5, 8) et correspondant à chaque rangée et colonne, respectivement, d'éléments (2) de conduction de la lumière, pour placer des fibres optiques entrantes ou sortantes, respectives, dans leurs positions correctes.

5. Commutateur selon l'une quelconque des revendications 3 ou 4, caractérisé en ce que les curseurs (4, 7) peuvent être déplacés dans les gorges de guidage (5, 8) au moyen de moteurs pas à pas ou analogues.

6. Commutateur selon l'une quelconque des revendications 3 à 5, caractérisé en ce que les curseurs (4, 7) ont, en coupe transversale, une configuration trapézoïdale, la base étant tournée vers le bloc (1) de matrice, et en ce que les gorges de guidage (4, 8) ont une configuration correspondante.

7. Commutateur selon la revendication 6, caractérisé en ce que les fibres optiques (3, 6) sortent dans la base des curseurs trapézoïdaux.
